# EUROPÄISCHE PATENTSCHRIFT

(11) **EP 2 150 430 B1**
(45) Veröffentlichungstag und Bekanntmachung des Hinweises auf die Patenterteilung: **28.12.2011**
(21) Anmeldenummer: 08748900.1
(22) Anmeldetag: 12.04.2008
(51) Int. Cl.: B60K 15/073, B60K 15/03

(54) **KRAFTSTOFFBEHÄLTER FÜR KRAFTFAHRZEUGE**
FUEL CONTAINER FOR MOTOR VEHICLES
RÉSERVOIR DE CARBURANT POUR VÉHICULES À MOTEUR

(30) Priorität: 06.06.2007 DE 102007026817
(43) Veröffentlichungstag der Anmeldung: 10.02.2010
(73) Patentinhaber: Kautex Textron GmbH & Co. KG., 53229 Bonn (DE)
(72) Erfinder: GEBERT, Klaus, 47877 Willich (DE); AUS DER WIESCHE, Stefan, 48163 Münster (DE)
(74) Vertreter: Polypatent
(86) Internationale Anmeldenummer: PCT/EP2008/002913
(87) Internationale Veröffentlichungsnummer: WO 2008/148442

(56) Entgegenhaltungen:
- EP-A- 0 559 410
- EP-A- 0 633 422
- DE-A1- 1 946 410
- DE-A1- 2 931 947
- FR-A- 2 813 378

## Beschreibung

Die Erfindung betrifft einen Kraftstoffbehälter für Kraftfahrzeuge aus thermoplastischem Kunststoff. Solche Kraftstoffbehälter werden normalerweise während des Betriebs und bei der Betankung zumindest teilweise über ein als Aktivkohlefilter ausgebildetes Kraftstoff-Dampffilter entlüftet.

Je nach Fahrzeugtyp und Betriebssituation kann es wünschenswert sein, den Kraftstoffbehälter hermetisch zu verschließen, was unter Umständen wegen der Verflüchtigungsneigung des Treibstoffs zumindest kurzfristig zu einem erhöhten Behälterinnendruck führen kann.

Beispielsweise bei Hybridfahrzeugen besteht bei Stillstand des Verbrennungsmotors nicht die Möglichkeit, das Aktivkohlefilter zurückzuspülen, so dass es vorteilhaft ist, in diesen Situationen den Kraftstoffbehälter hermetisch zu verschließen, um das Austreten von Kohlenwasserstoffen zum Aktivkohlefilter zu verhindern. Der sich dadurch aufbauende Tankinnendruck sorgt für temporäre oder auch bleibende Verformungen der Tankschale.

Aus der DE 19 46 410 A ist ein Brennstofftank für Kraftfahrzeuge nach dem Oberbegiff des Anspruchs 1 bekannt, welcher aus blasverformtem Kunststoff mit zwei einander im Wesentlichen parallel gegenüberliegenden Seitenwänden ausgebildet ist. Wenigstens eine Seitenwand ist zu einem nach innen ragenden Ansatz verformt, der mit einer Innenllegenden Fläche gegen die andere Seitenwand anliegt und mit dieser verbunden ist, um die Widerstandfähigkeit der Seitenwände zu erhöhen.

Aus den Dokumenten EP 0 633 422 A1 und DE 29 31 947 A sind Druckgasbehältnisse bekannt, die in ähnlicher Art und Weise versteift sind.

Ein ähnliches Behältnis ist beispielsweise schließlich aus der FR 2 813 378 A bekannt.

Bei sogenannten Einkammertanks kann die Verformung durch geeignete Spann-oder Tragebänder begrenzt werden.

Bei Sattel-oder Mehrkammertanks, bei denen die Kardanwelle des Fahrzeugs zwischen den beiden Tankhälften verläuft, können sich bei Überdruck kritische Verformungen ergeben, die den Freiraum der sich in der Regel bewegenden Kardanwelle reduzieren.

Der Erfindung liegt daher die Aufgabe zugrunde, einen als Satteltank ausgebildeten Kraftstoffbehälter so auszubilden, dass eine kritische Verformung der Tankschalen möglichst vermieden wird.

Die Aufgabe wird gelöst mit den Merkmalen des Anspruchs 1. Vorteilhafte Ausgestaltungen der Erfindung ergeben sich aus den Unteransprüchen.

Wenn der Kraftstoffbehälter als Satteltank mit zwei nebeneinander angeordneten Hauptvolumina ausgebildet ist, die über eine im Querschnitt etwa U-förmige Einschnürung der Behälterwandung miteinander kommunizieren, ist es besonders zweckmäßig, wenn das Versteifungselement in der Einschnürung der Behälterwandung angeordnet ist. Unter Einschnürung der Behälterwandung im Sinne der Erfindung ist ein Bereich des Behälters zu verstehen, in dem der lichte Innenquerschnitt gegenüber zu wenigstens zwei Seiten vorgesehenen Bereichen mit größerem oder normalem Innenquerschnitt reduziert ist. Innerhalb der Einschnürung des Behälters bedeutet außerhalb des Behältervolumens bzw. außen am Behälter oder innerhalb des von der Einschnürung oder Einziehung begrenzten Bauraums.

Damit eine Ausbeulung oder Ausbauchung der Behälterwandung nach außen in Einbaulage im Bereich für die Kardenwelle zuverlässig vermieden wird, ist es zweckmäßig, mehrere, mit Abstand zueinander angeordnete, vorzugsweise metallene, dem Querschnitt der Einschnürung angepasste Versteifungselemente in Form von Versteifungsbügeln vorzusehen.

Anzahl und Abstand der Versteifungsbügel können so gewählt sein, dass der gesamte Kardantunnel des Kraftstoffbehälters, bzw. dessen Seitenwände, zuverlässig abgestützt ist.

Alternativ kann als Versteifungselement ein dem Querschnitt der Einschnürung angepasstes tunnelförmiges Verstärkungsblech vorgesehen sein. Besonders günstig ist es, wenn entweder die Versteifungsbügel oder das Versteifungsblech bei der Herstellung des Kraftstoffbehälters, beispielsweise durch Extrusionsblasformen, als Einlegeteil in das Formwerkzeug eingebracht wurden.

Die Versteifungselemente sind zweckmäßigerweise so ausgebildet, dass sie über eine Hebelwirkung einer zu erwartenden Verformung der Behälterwandung in dem betreffenden Bereich des Kraftstoffbehälters, beispielsweise in der Einschnürung eines Satteltanks, entgegenwirken.

Die Versteifungsbügel sind zweckmäßigerweise im Querschnitt etwa U-förmig ausgebildet.

Bei einer ebenfalls vorteilhaften Variante des Kraftstoffbehälters gemäß der Erfindung ist vorgesehen, dass die freien Enden der Schenkel der Versteifungsbügel mit einem zusätzlichen Versteifungselement verbunden sind. Dieses Versteifungselement kann beispielsweise als sogenannter Bodenriegel ausgebildet sein, der vor oder nach Montage des Kraftstoffbehälters in einem Kraftfahrzeug mit dem Versteifungsbügel verschraubt werden kann und der insbesondere unterhalb der Kardanwelle angeordnet sein kann. Der Begriff "unterhalb" bezieht sich auf die Einbaulage des Kraftstoffbehälters im Kraftfahrzeug.

Jeder einzelne Versteifungsbügel kann mit einem Bodenriegel versehen sein. Auch können nur einige der Versteifungsbügel jeweils mit einem Bodenriegel versehen sein, so dass beispielsweise Bodenriegel nur an solchen Stellen montiert werden müssen, an denen besonders hohe Lastspitzen zu erwarten sind.

Bei einer Variante des Kraftstoffbehälters gemäß der Erfindung ist vorgesehen, dass die Versteifungsbügel als Rohr mit etwa rundem Querschnitt ausgebildet sind, welcher zumindest teilweise formschlüssig von dem Material der Behälterwandung eingefasst ist. Eine solche Ausbildung des Versteifungsbügels eignet sich besonders dazu, als Einlegeteil bei der Ausformung des Kraftstoffbehälters durch Extrusionblasformen verwendet zu werden.

Alternativ können die Versteifungsbügel mit Durchbrüchen versehen sein, die von dem Kunststoff der Behälterwandung durchflossen sind. In diesem Fall können die Versteifungsbügel auch als Profile mit rechteckigem Querschnitt, beispielsweise als Bandstahlprofile ausgebildet sein.

Anstelle eines einzelnen Bodenriegels kann auch ein zusätzliches Versteifungselement in Form einer Bodenplatte vorgesehen sein, die an mehreren Versteifungsbügeln oder gar mit einem Versteifungsblech verschraubbar ist.

Die Verwendung eines tunnelförmigen Versteifungsblechs hat den Vorzug, dass dieses gleichzeitig auch als Hitzeschutzschild für die Unterseite des Kraftstoffbehälters dienen kann.

Die Erfindung wird nachstehend anhand eines in den Zeichnungen dargestellten Ausführungsbeispiels erläutert.

Es zeigen:
- Figur 1: Einen Satteltank mit beispielsweise drei Versteifungsbügeln,
- Figur 2: einen Schnitt entlang der Linien II-II in Figur 1,
- Figur 3: eine vergrößerte Schnittansicht entlang der Linien III-III in Figur 1,
- Figur 4: einen Schnitt durch ein profiliertes Versteifungsblech gemäß der Erfindung,
- Figur 5: einen Schnitt einer alternativen Variante eines Versteifungsblechs gemäß der Erfindung,
- Figur 6: ein Versteifungsblech nach der in Figur 5 dargestellten Variante in perspektivischer Ansicht und
- Figur 7: einen Schnitt durch den Kraftstoffbehälter mit in diesen eingesetzten Versteifungsbügeln mit Bodenriegel, wobei die Versteifungsbügel nach der Herstellung des Kraftstoffbehälters in eine Einschnürung desselben eingesetzt wurden.

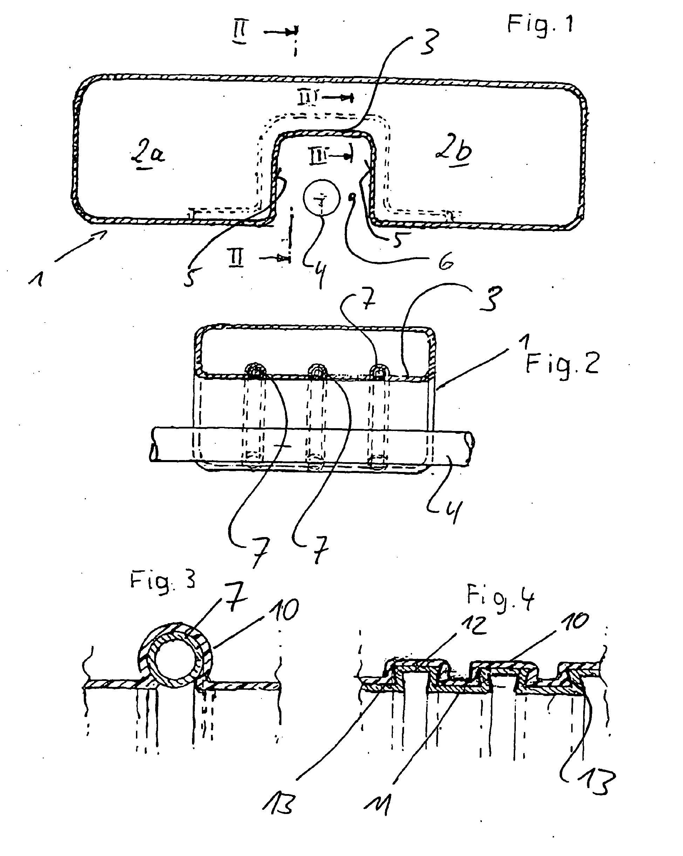

In Figur 1 ist ein Kraftstoffbehälter 1 aus thermoplastischem Kunststoff im Schnitt dargestellt. Der Kraftstoffbehälter 1 ist als Satteltank mit zwei Kammern 2a, 2b ausgebildet. Die Kammern 2a, 2b entstehen durch eine Einschnürung 3 des Kraftstoffbehälters, die in Einbaulage des Kraftstoffbehälters 1 die nur andeutungsweise dargestellte Kardanwelle 4 des Kraftfahrzeuges aufnimmt. Die Zeichnung ist sehr schematisch und gibt keineswegs die tatsächlichen Größenverhältnisse der Einzelteile zueinander wieder.

Steigt der im Kraftstoffbehälter 1 vorhandene Innendruck, so neigen die sich gegenüberliegenden Behälterwandabschnitte 5 im Bereich der Einschnürung 3 des Kraftstoffbehälters dazu auszubauchen, wodurch der für die Kardanwelle 4 zur Verfügung stehende Bauraum unter Umständen beeinträchtigt werden könnte.

Um dem entgegenzuwirken, ist nach einer ersten Variante des erfindungsgemäßen Kraftstoffbehälters 1 vorgesehen, dass der durch die Einschnürung 3 definierte Kardantunnel 6 des Kraftstoffbehälters über seine gesamte Länge, d.h. in Figur 1 in die Zeichnungsebene hinein mit Versteifungsbügeln 7 verstärkt ist.

Bei der zunächst beschriebenen Variante der Erfindung sind die Versteifungsbügel als im Querschnitt etwa U-förmige Rohrbögen mit rundem Querschnitt ausgebildet, wobei die Versteifungsbügel 7 zwei sich in Einbaulage etwa senkrecht erstreckende Schenkel 8 mit zwei sich hierzu etwa rechtwinklig erstreckenden Haltewinkeln 9 bilden.

Die Haltewinkel 9 müssen nicht notwendigerweise an der Behälterwandung 10 anliegen, vielmehr können diese mit Abstand zu der Behälterwandung 10 angeordnet sein, so dass ein gewisser Verformungsweg der Behälterwandung zugelassen wird.

Wie dies insbesondere den Figuren 2 und 3 zu entnehmen ist, ist der Querschnitt der Versteifungsbügel 7 über den größten Teil seines Umfangs (mehr als 180°) von dem Kunststoff der Behälterwandung 10 des Kraftstoffbehälters 1 umschlossen.

Der Kraftstoffbehälter 1 wurde einstückig durch Extrusionblasformen von thermoplastischem Kunststoff erhalten, wobei die Versteifungsbügel 7 bei der in den Figuren 1 bis 3 gezeigten Variante des Kraftstoffbehälters bei dessen Ausformung formschlüssig eingeformt wurden. Mit anderen Worten, die Versteifungsbügel 7 wurden als Einlegeteil in das Formwerkzeug eingesetzt und von dem Kunststoff des ausgeformten Materials während der Herstellung des Kraftstoffbehälters 1 zumindest teilweise umflossen.

Alternativ hierzu kann vorgesehen sein, dass die Versteifungsbügel 7 stoffschlüssig mit der Behälterwandung 10 verbunden sind, beispielsweise mit dieser verschweißt sind. Die Versteifungsbügel können aus Metall bzw. Stahl oder einem anderen Werkstoff hoher Steifigkeit gefertigt sein.

Die Versteifungsbügel 7 müssen nicht notwendigerweise unter Spannung in dem Kardantunnel 6 des Kraftstoffbehälters 1 angeordnet sein. Diese sollen vielmehr einer zu erwartenden Verformung entgegenwirken. Obwohl das Versteifungsblech 11 vorzugsweise als Stahlblech ausgeführt ist, kann dieses Bauteil auch aus einem anderen Werkstoff hoher Steifigkeit bestehen.

Da bei entsprechenden Druckverhältnissen in dem Kraftstoffbehälter 1 auch eine Ausbauchung in den Ecken der Einschnürung 3 zu erwarten ist, sind an den Versteifungsbügeln 7 Haltwinkel 9 vorgesehen, die die Kammern, 2a, 2b des Kraftstoffbehälters 1 teilweise unterfangen.

Bei einer alternativen Variante des Kraftstoffbehälters 1 gemäß der Erfindung ist vorgesehen, dass ein Versteifungsblech 11 (metallen, z.B. Stahlblech) in die Einschnürung 3 bzw. in den Kardantunnel 6 des Kraftstoffbehälters 1 eingesetzt ist. Das Versteifungsblech 11 ist im Querschnitt als Rippenprofil ausgebildet, wie dies insbesondere der Figur 4 zu entnehmen ist. Die einzelnen Rippen 12 des Versteifungsprofils können mit hinterschnittenen Flanken 13 versehen sein, die nach Art eines Schwalbenschwanzprofils mit der Behälterwandung 10 zusammenwirken.

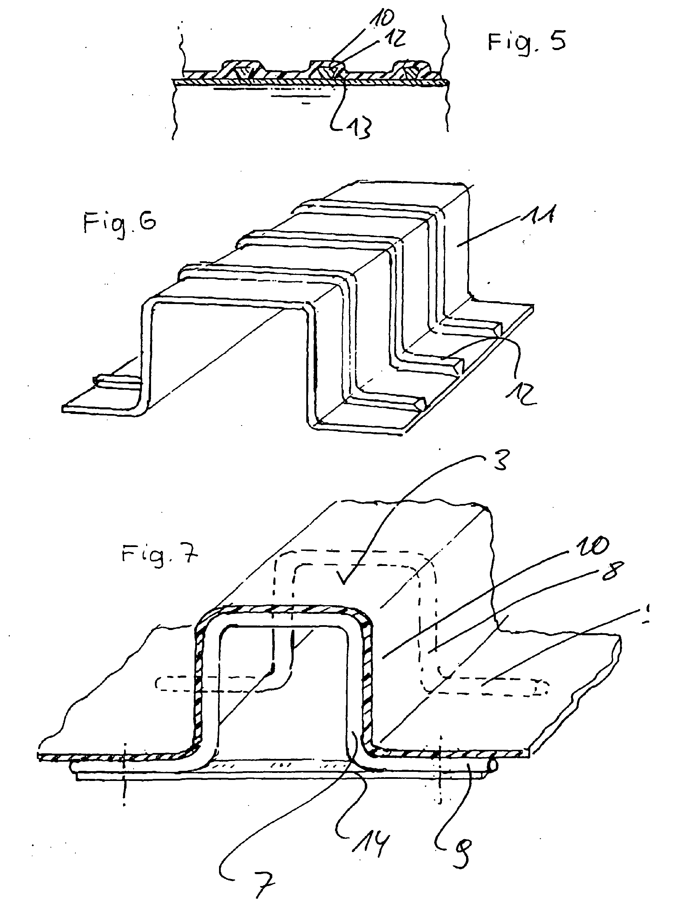

Alternativ hierzu kann das Versteifungsblech 11 im Wesentlichen glattwandig ausgebildet sein, wie dies in den Figuren 5 und 6 dargestellt ist, wobei auf der dem Kraftstoffbehälter 1 zugewandten Seite auf dieses ebenfalls Rippen 12 aufgebracht sind, die mit hinterschnittenen Flanken 13 versehen sind.

In Figur 7 ist schließlich eine Variante des Kraftstoffbehälters 1 dargestellt, bei welchem Versteifungsbügel 7 vorgesehen sind, die nicht in den Kraftstoffbehälter 1 eingeformt sind. Vielmehr sind diese mit nicht dargestellten Verschraubungen gesichert. Hierzu können beispielsweise Schrauben durch Wand-zu-Wand-Verschweißungen des Kraftstoffbehälters im Bereich der Einschnürung 3 desselben hindurchgeführt sein. Die freien Schenkel 8 bzw. die Haltewinkel 9 der Schenkel 8 der Versteifungsbügel 7 sind bei dem in Figur 7 dargestellten Ausführungsbeispiel mit Bodenriegeln 14 verschraubt, die der zusätzlichen Aussteifung des Systems dienen und die vor oder nach Einbau des Kraftstoffbehälters 1 im Kraftfahrzeug befestigt werden.

### Bezugszeichenliste:

- 1: Satteltank
- 2a,b: Kammern
- 3: Einschnürung
- 4: Kardanwelle
- 5: Behälterwandabschnitte
- 6: Kardantunnel
- 7: Versteifungsbügel
- 8: Schenkel
- 9: Haltewinkel
- 10: Behälterwandung
- 11: Versteifungsblech
- 12: Rippen
- 13: Flanken
- 14: Bodenriegel

## Patentansprüche

1. Kraftstoffbehälter (1) für Kraftfahrzeuge, aus thermoplastischem Kunststoff, wobei der Kraftstoffbehälter wenigstens ein Versteifungselement (7, 11) aufwefst, das form- und/oder stoffschlüssig mit dessen Außenwandung derart zusammenwirkt, dass dieses einer durch den Innendruck des Kraftstoffbehälters bedingten Deformation entgegenwirkt, **dadurch gekennzeichnet, dass** der Kraftstoffbehälter als Satteltank mit zwei nebeneinander angeordneten Hauptvolumina ausgebildet ist, die über eine im Querschnitt etwa U-förmige Einschnürung (3) der Behälterwandung (10) miteinander kommunizieren, wobei das Versteifungselement (7, 11) in der Einschnürung der Behälterwandung (10) angeordnet ist.

2. Kraftstoffbehälter nach Anspruch 1, dadurch gekenntzeichnet, dass mehrere mit Abstand zueinander angeordnete, vorzugsweise metallene, dem Querschnitt der Einschnürung (3) angepasste Versteifungselemente in Form von Versteifungsbügeln (7) vorgesehen sind.

3. Kraftstoffbehälter nach Anspruch 1, **dadurch gekennzeichnet, dass** als Versteifungselement ein dem Querschnitt der Einschnürung (3) angepasstes, tunnelförmiges Versteifungsblech (11) vorgesehen ist.

4. Kraftstoftbehälter nach Anspruch 2, **dadurch gekennzeichnet, dass** die Versteifungsbügel (7) im Querschnitt etwa U-förmig ausgebildet sind.

5. Kraftstoffbehälter nach Anspruch 2 oder 4, **dadurch gekennzeichnet, dass** ein zusätzliches Versteifungselement (14) vorgesehen ist, dass die Enden der Schenkel (8) der Versteifungsbügel (7) daran hindert, auseinandergetrieben zu werden.

6. Kraftstoffbehälter nach einem der Ansprüche 2, 4 oder 5, **dadurch gekennzeichnet, dass** die Versteifungsbügel (7) als Rohr mit etwa rundem Querschnitt ausgebildet sind, welcher zumindest teilweise formschlüssig von dem Material der Behälterwandung (10) eingefasst ist.

7. Kraftstoffbehälter nach einem der Ansprüche 1 bis 6, **dadurch gekennzeichnet, dass** das Versteifurigsalement (7, 11) nur bereichswelse an der Behälterwandung anliegt.

## Claims

1. A fuel tank (1) for motor vehicles, made of thermoplastic plastics material, wherein the fuel tank has at least one reinforcing element (7, 11) which cooperates with its outer wall with form fit and/or force fit in such a way that this counteracts a deformation caused by the internal pressure of the fuel tank, **characterised in that** the fuel tank is constructed as a saddle tank with two adjacently arranged main volumes which communicate with one another by way of a cross-sectionally approximately U-shaped narrowing (3) of the tank wall (10), wherein the reinforcing element (7, 11) is arranged in the narrowing of the tank wall (10).

2. A fuel tank according to Claim 1, **characterised in that** a plurality of preferably metallic reinforcing elements arranged at a spacing from one another and adapted to the cross-section of the narrowing (3) are provided in the form of reinforcing clips (7).

3. A fuel tank according to Claim 1, **characterised in that** a tunnel-shaped reinforcing plate (11) adapted to the cross-section of the narrowing (3) is provided as a reinforcing element.

4. A fuel tank according to Claim 2, **characterised in that** the reinforcing clips (7) are constructed to be approximately U-shaped in cross-section.

5. A fuel tank according to Claim 2 or 4, **characterised in that** an additional reinforcing element (14) is provided which prevents the ends of the arms (8) of the reinforcing clips (7) from being driven apart.

6. A fuel tank according to one of Claims 2, 4 or 5, **characterised in that** the reinforcing clips (7) are constructed as a tube with an approximately circular cross-section which is at least partially enclosed with form fit by the material of the tank wall (10).

7. A fuel tank according to one of Claims 1 to 6, **characterised in that** the reinforcing element (7, 11) abuts against the tank wall only in parts.

## Revendications

1. Réservoir de carburant (1) pour véhicules à moteur, en thermoplastique, sachant que le réservoir de carburant présente au moins un élément de renforcement (7, 11) qui coagit positivement et/ou par liaison de matière avec sa paroi extérieure de telle manière qu'il agisse contre une déformation due à la pression interne du réservoir de carburant, **caractérisé en ce que** le réservoir de carburant est réalisé comme un réservoir en forme de selle avec deux volumes principaux disposés l'un à côté de l'autre qui communiquent entre eux par un rétrécissement (3) de la paroi de réservoir (10), dont la section transversale présente une forme à peu près en U, sachant que l'élément de renforcement (7, 11) est disposé dans le rétrécissement de la paroi de récipient (10).

2. Réservoir de carburant selon la revendication 1, **caractérisé en ce que** plusieurs éléments de renforcement disposés à distance les uns des autres, de préférence métalliques, adaptés à la section transversale du rétrécissement (3) sont prévus sous la forme d'étriers de renforcement (7).

3. Réservoir de carburant selon la revendication 1, **caractérisé en ce qu'**une tôle de renforcement (11) en forme de tunnel, adaptée à la section transversale du rétrécissement (3) est prévue comme élément de renforcement.

4. Réservoir de carburant selon la revendication 2, **caractérisé en ce que** la section transversale des étriers de renforcement (7) est réalisée à peu près en forme de U.

5. Réservoir de carburant selon la revendication 2 ou 4, **caractérisé en ce qu'**un élément de renforcement (14) supplémentaire est prévu, lequel empêche les extrémités des branches (8) des étriers de renforcement (7) d'être dispersées.

6. Réservoir de carburant selon l'une quelconque des revendications 2, 4 ou 5, **caractérisé en ce que** les étriers de renforcement (7) sont réalisés comme un tube avec une section transversale à peu près ronde, qui est entouré au moins en partie positivement par le matériau de la paroi de réservoir (10).

7. Réservoir de carburant selon l'une quelconque des revendications 1 à 6, **caractérisé en ce que** l'élément de renforcement (7, 11) ne repose que par endroits sur la paroi de récipient.
